# EUROPÄISCHE PATENTSCHRIFT

(11) **EP 3 281 811 B1**
(45) Veröffentlichungstag und Bekanntmachung des Hinweises auf die Patenterteilung: **11.11.2020**
(21) Anmeldenummer: 17185660.2
(22) Anmeldetag: 10.08.2017
(51) Int. Cl.: B60C 23/06, B60C 23/10, B60C 23/00

(54) **VERFAHREN UND VORRICHTUNG ZUR ÜBERPRÜFUNG DES REIFENLUFTDRUCKS EINES ZWEIRADS**
METHOD AND DEVICE FOR EVALUATING THE TYRE PRESSURE OF A BICYCLE
PROCÉDÉ ET DISPOSITIF DE VÉRIFICATION DE LA PRESSION DES PNEUMATIQUE D'UNE BICYCLETTE

(30) Priorität: 11.08.2016 DE 102016214953
(43) Veröffentlichungstag der Anmeldung: 14.02.2018
(73) Patentinhaber: Robert Bosch GmbH, 70442 Stuttgart (DE)
(72) Erfinder: Mayer, Marcel, 89173 Lonsee (DE); Schnee, Jan, 71093 Weil Im Schoenbuch (DE)

(56) Entgegenhaltungen:
- EP-A2- 1 127 720
- DE-A1-102007 029 870
- DE-A1-102013 109 215
- JP-A- H01 141 106

## Beschreibung

### Stand der Technik

Die Erfindung betrifft ein Verfahren, eine Vorrichtung und ein Zweirad bzw. Fahrrad zur Überprüfung des Reifenluftdrucks eines Zweirads.

Das Dokument DE 10 2006 028 411 A1 beschreibt ein Verfahren und eine Vorrichtung zur Zustandserkennung eines Reifens und/oder einer Fahrbahn. Hierbei ist zur Erkennung des Reifenluftdrucks ein Beschleunigungssensor in den Reifen integriert, wobei dieser Beschleunigungssignale aussendet, wenn Kontakt mit der Fahrbahn besteht. Hieraus können Informationen über die Reifeneigenschaften und die Fahrbahneigenschaften gewonnen werden.

Aus dem Dokument DE 3236520 A1 ist zudem ein Verfahren bekannt, bei dem die Drehzahl eines Reifens erfasst wird und in Abhängigkeit des Vergleichs der erfassten Drehzahlen mit einer Referenzgeschwindigkeit Informationen über den Reifendluftdruck ermittelt werden können.

Das Dokument JP H01 141106 A beschreibt ein Verfahren zur Überprüfung des Reifenluftdrucks eines Motorrads. Hierbei wird ermittelt, ob sich das Motorrad aktuell geradeaus und mit konstanter Geschwindigkeit bewegt und falls dies zutrifft, ob das Verhältnis von erfassten Vorderrad- und Hinterradumdrehungen einen vorbestimmten Wert überschreitet. In Abhängigkeit einer Überschreitung des vorbestimmten Wertes, leuchtet eine Anzeigenlampe auf.

Das Dokument EP 1 127 720 A2 beschreibt ein Verfahren zur Bestimmung des Reifenluftdrucks eines vierrädrigen Fahrzeugs beschrieben, bei dem ein sogenannter Druckabnahme-Bestimmungswert (DEL-Wert) unter Berücksichtigung der Drehzahlen aller vier Räder berechnet wird. Zusätzlich kann dieser "Druckabnahme-Bestimmungswert" modifiziert werden, indem der DEL-Wert mit einem Gewichtungsfaktor multipliziert wird, welcher von dem Lenkwinkel abhängig gemacht wird. Anschließend wird abhängig von der Größe des DEL-Werts ein Alarm ausgebeben, welcher auf einen zu niedrigen Reifenluftdruck eines der vier Räder hindeutet.

Das Dokument DE 10 2007 029 870 A1 beschreibt ein Verfahren zur Überwachung des Zustandes eines Reifens, bei welchem aus Raddrehzahlsignalen der Fahrzeugräder mindestens ein Analysewert gebildet wird. Dieser Analysewert kann ein absoluter Abrollumfang eines Reifens darstellen.

Das Dokument DE 10 2013 109 215 A1 beschreibt ein Fahrrad mit integrierter Pumpe und Reifendrucküberwachung.

Bei Zweirädern, wie beispielsweise einem Fahrrad müssen unterschiedlich erfasste Drehzahlen der Reifen jedoch nicht zwangsläufig bedeuten, dass der Reifenluftdruck eines Reifens zu niedrig ist. So kann es bei einer kurvigen Fahrt des Zweirads dazu kommen, dass unterschiedliche Raddrehzahlen angezeigt werden, obwohl der Reifenluftdruck der zwei Reifen nicht wesentlich voneinander abweicht. Vorder- und Hinterrad fahren nämlich während einer Kurvenfahrt unterschiedliche Kurvenradien ab, weshalb sich das Vorderrad schneller dreht als das Hinterrad.

Es ist daher Aufgabe der Erfindung, ein Reifenluftdrucküberwachungssystem bereitzustellen, das die Erzeugung dieser fehlerhaften Informationen eliminiert.

### Offenbarung der Erfindung

Vorgeschlagen werden erfindungsgemäß ein Verfahren, eine Vorrichtung, die das Verfahren ausführt und ein die Recheneinheit aufweisendes Fahrrad zur Überprüfung des Reifenluftdrucks eines Zweirads.

Das Verfahren sowie die Recheneinheit erfassen zunächst eine Lenkerstellung des Zweirads sowie die Drehzahl eines Vorderrads und eines Hinterrads des Zweirads.

Die Lenkerstellung bestimmt beispielsweise den Lenkereinschlagwinkel des Zweirads. Falls sich das Zweirad bewegt, kann so zwischen unterschiedlichen Bewegungsrichtungen des Zweirads unterschieden werden. Anschließend wird eine Information über den Reifenluftdruck des Zweirads in Abhängigkeit der erfassten Lenkerstellung und der erfassten Drehzahlen jedes Rades des Zweirads erzeugt. Die Reifenluftdruckinformation kann eine Information über den Luftdruck beider Radreifen gemeinsam oder separat nur von einem Reifen darstellen. Zusätzlich kann auch zur selben Zeit der Reifenluftdruck beider Radreifen separat einzeln dargestellt werden. Die Reifenluftdruckinformation kann insbesondere eine Information über die Luftdruckdifferenz von einem ersten Zeitpunkt zu einem zweiten Zeitpunkt darstellen.

Vorzugsweise wird zur Erfassung der Lenkerstellung ein Lenkereinschlagwinkel des Zweirads erfasst. Dies bietet den Vorteil, dass bei einer Fahrt des Fahrrads die momentane Bewegungsrichtung des Zweirads genauer bestimmt werden kann.

Bevorzugt werden bei dem Verfahren die erfassten Drehzahlen des Vorderrads und des Hinterrads miteinander verglichen. Anschließend wird die Reifenluftdruckinformation erzeugt, falls eine festgestellte Drehzahlabweichung einen von der Lenkerstellung abhängigen Schwellenwert überschreitet. Diese Reifenluftdruckinformation repräsentiert eine Information über eine zu große Abweichung des Reifenluftdrucks. Dies bietet den Vorteil, dass durch Kurvenfahrten entstehende Abweichungen der Drehzahlen als solche erkannt werden können und bei der Informationserzeugung berücksichtigt werden können.

Bevorzugt wird bei dem Verfahren die Bewegungsrichtung des Zweirads in Abhängigkeit der erfassten Lenkerstellung ermittelt. Anschließend wird die Informationen über den Reifenluftdruck bei einer im Wesentlichen bzw. näherungsweise geradlinigen Bewegungsrichtung des Zweirads erzeugt, sodass fehlerhafte Reifenluftdruckinformationen verhindert werden können.

Vorzugsweise wird ein von dem Lenkereinschlagwinkel abhängiger Korrekturfaktor berechnet. Die Drehzahl eines Rades wird anschließend mittels des Korrekturfaktors modifiziert. Darauf folgend wird die modifizierte Drehzahl des einen Rades mit der Drehzahl des anderen Rades verglichen. Anschließend wird die Reifenluftdruckinformation erzeugt, falls eine festgestellte Drehzahlabweichung einen von der Lenkerstellung abhängigen Schwellenwert überschreitet. Die Verwendung dieses Korrekturfaktors bietet die Möglichkeit, die festgestellten Abweichungen mittels unterschiedlicher mathematischer Angleichungen vergleichen zu können.

Bevorzugt wird in dem Verfahren eine Drehgeschwindigkeit des Zweirads in Abhängigkeit der im vorgegebenen Zeitraum erfassten Drehzahl des Vorderrads und/oder des Hinterrads ermittelt. Außerdem wird eine von der Drehgeschwindigkeit unabhängige Geschwindigkeit des Zweirads erfasst. Darauf folgend wird der absolute Reifenluftdruck des Vorderrads und/oder des Hinterrads in Abhängigkeit der Drehgeschwindigkeit und der unabhängigen Geschwindigkeit des Zweirads ermittelt. Dies bietet beispielsweise den Vorteil, dass bei Durchführung der Verfahrensschritte für jedes der Räder des Zweirads auch geprüft werden kann, ob beide Räder überhaupt genug Reifenluftdruck besitzen. Andernfalls kann es beispielsweise dazu kommen, dass beide Räder zu Beginn des Verfahrens einen annährend gleichen Reifenluftdruck aufweisen, der jedoch nicht optimal eingestellt ist.

Bevorzugt wird in dem Verfahren der Reifenluftdruck wenigstens eines Rades in Abhängigkeit der festgestellten Abweichung der Drehzahlen zueinander angepasst. Alternativ oder zusätzlich wird der Reifenluftdruck in Abhängigkeit des ermittelten absoluten Reifenluftdrucks angepasst. Die Anpassung des Reifenluftdrucks bietet den Vorteil, dass der Energieaufwand zur Fortbewegung des Zweirads verringert werden kann, da beispielsweise ein zu geringer Reifenluftdruck dazu führt, dass sich der Rollwiderstand erhöht. Zur Erhöhung des Reifenluftdrucks ist die Recheneinheit des Fahrrads dazu ausgebildet wenigstens eine am Fahrrad angeordnete Pumpe anzusteuern, falls eine festgestellte Abweichung und/oder der von der Recheneinheit ermittelte absolute Reifenluftduck einen von der Lenkerstellung abhängigen Schwellenwert überschreitet. Die Ansteuerung der Pumpe durch die Recheneinheit bietet den Vorteil, dass der Reifenluftdruck wenigstens eines Rades automatisch angepasst werden kann, ohne dass der Fahrer hierfür selbst tätig werden muss.

Die Erfindung umfasst zudem ein Fahrrad, welches wenigstens aus einer Recheneinheit, einer Lenkerstellungserfassungseinheit, einer ersten Drehzahlerfassungseinheit für das Vorderrad des Zweirads, einer zweiten Drehzahlerfassungseinheit für das Hinterrad des Zweirads, einer Geschwindigkeitserfassungseinheit und einer Ausgabeeinheit besteht. Die Lenkstellungserfassungseinheit dient zur Erfassung einer Lenkerstellung des Zweirads. Die Drehzahlerfassungseinheiten sind dazu ausgebildet, die Drehzahlen für das jeweilige Rad des Zweirads zu erfassen. Die Geschwindigkeitserfassungseinheit ist dazu ausgebildet, eine von der Drehgeschwindigkeit unabhängige Geschwindigkeit des Zweirads zu erfassen und die Ausgabeeinheit, eine Reifenluftdruckinformation jedes Rades des Zweirads auszugeben. Die Recheneinheit führt das zuvor beschriebene Verfahren zur Überprüfung des Reifenluftdrucks eines Zweirads aus.

Kurze Beschreibung der Zeichnungen
Figur 1 zeigt eine Ausführungsform der erfindungsgemäßen Recheneinheit.
Figur 2 zeigt das erfindungsgemäße Fahrrad.
Figur 3a zeigt einen Verfahrensablauf gemäß einer ersten Ausführungsform der Erfindung zur Überprüfung des Reifenluftdrucks eines Zweirads.
Figur 3b zeigt einen Verfahrensablauf gemäß einer zweiten Ausführungsform der Erfindung zur Überprüfung des Reifenluftdrucks eines Zweirads.

### Ausführungsbeispiele

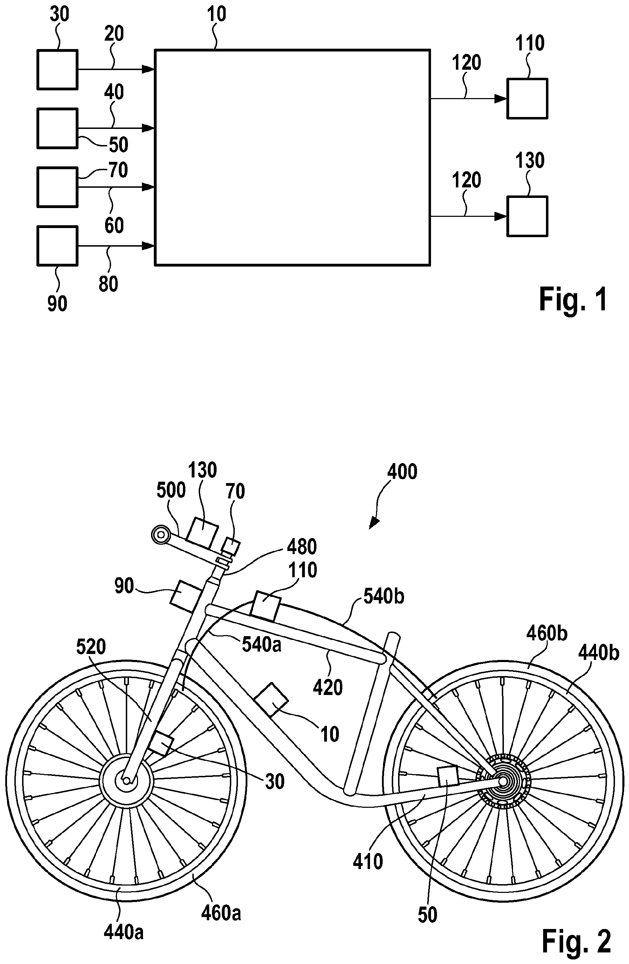

Figur 1 zeigt eine beispielhafte schematische Darstellung der erfindungsgemäßen Recheneinheit 10. Hierbei erfasst die Recheneinheit 10 eine Lenkerstellung 60 des Zweirads von einer Lenkerstellungserfassungseinheit 70 und zudem die Drehzahlen 20 eines Vorderrades des Zweirads von einer ersten Drehzahlerfassungseinheit 30. Außerdem erfasst die Recheneinheit die Drehzahlen 40 eines Hinterrades des Zweirads von einer zweiten Drehzahlerfassungseinheit 50. Die Recheneinheit 10 erzeugt in Abhängigkeit dieser erfassten Werte eine Reifenluftdruckinformation 120 des Zweirads. Diese Reifenluftdruckinformation 120 kann den Zustand des Reifenluftdrucks eines der beiden Räder des Zweirads repräsentieren, sie kann allerdings auch eine Reifenluftdruckinformation 120 beider Räder gemeinsam darstellen. Zusätzlich kann auch zur selben Zeit der Reifenluftdruck beider Radreifen einzeln dargestellt werden.

Optional leitet die Recheneinheit 10 diese Reifenluftdruckinformation 120 an eine Ausgabeeinheit 130 weiter, die die Information beispielsweise über einen Display an den Fahrer des Zweirads ausgibt.

Die Recheneinheit 10 ermittelt eine Drehgeschwindigkeit (v_{VR},v_{HR}) des Vorderrades und/oder des Hinterrades des Zweirads optional in Abhängigkeit der erfassten ersten Drehzahlen 20,40 eines Rades. Optional erfasst die Recheneinheit 10 eine von einer Drehgeschwindigkeit (v_{VR},v_{HR}) des Vorderrades und/oder des Hinterrades des Zweirads unabhängige Geschwindigkeit 80 (v_{Rad}) des Zweirads von einer Geschwindigkeitserfassungseinheit 90. In Abhängigkeit der Drehgeschwindigkeit (v_{VR},v_{HR}) des Vorderrades und/oder des Hinterrades des Zweirads und der unabhängigen Geschwindigkeit 80 (v_{Rad}) des Zweirads ermittelt die Recheneinheit 10 optional den absoluten Reifenluftdruck des jeweiligen Rades.

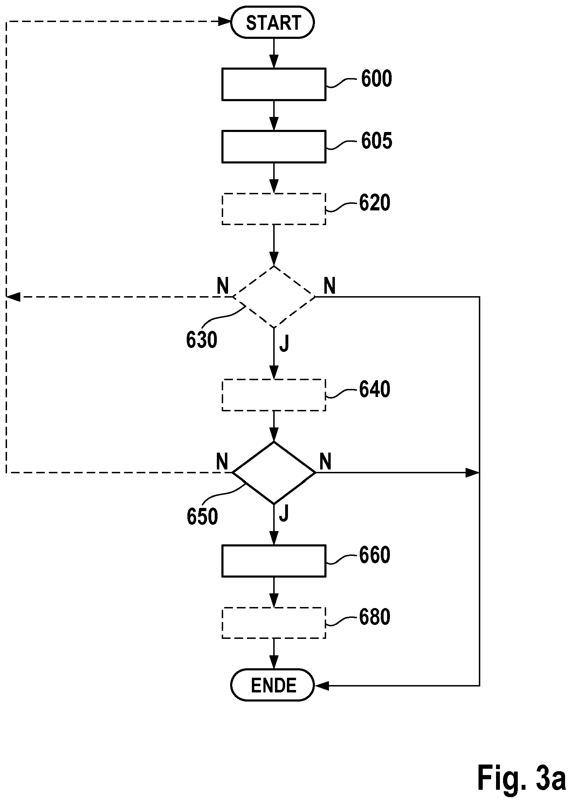

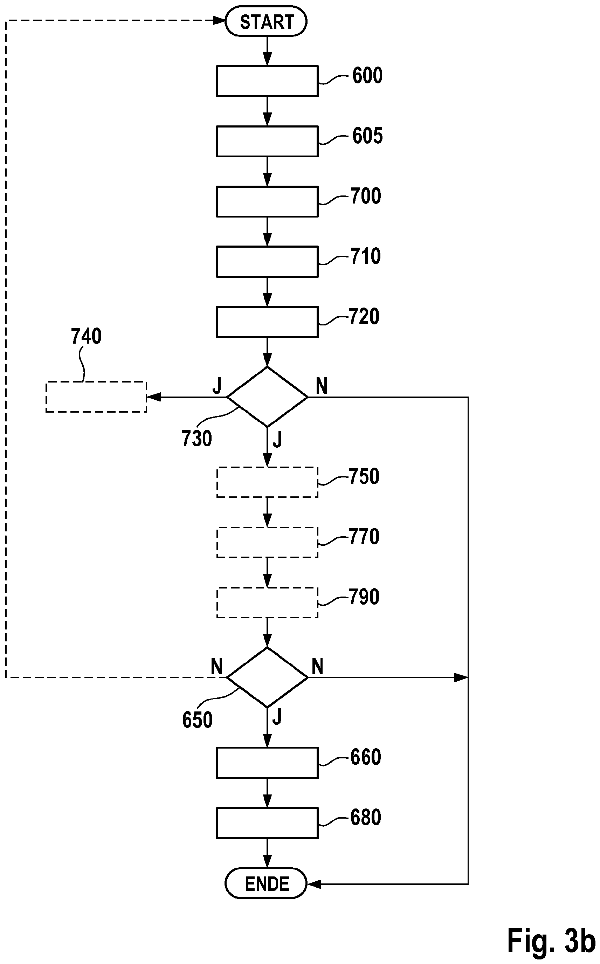

Optional steuert die Recheneinheit 10 eine Pumpe 110 zur Erhöhung des Luftdrucks wenigstens eines Rades an, falls eine festgestellte Abweichung und/oder der von der Recheneinheit 10 ermittelte absolute Reifenluftdruck einen von der Lenkerstellung abhängigen Schwellenwert überschreitet. Die Recheneinheit 40 führt die in den Figuren 3a und Figuren 3b dargestellten Ausführungsbeispiele eines erfindungsgemäßen Verfahrens aus.

Figur 2 zeigt eine mögliche Anordnung der erfindungsgemäßen Recheneinheit 60, der Lenkerstellungserfassungseinheit 70, der Geschwindigkeitserfassungseinheit 90, der ersten Drehzahlerfassungseinheit 30, der zweiten Drehzahlerfassungseinheit 50, der Ausgabeeinheit 130 und der optionalen Pumpe an dem erfindungsgemäßen Fahrrad 400.

Die Recheneinheit 60 ist an dem Rahmen 420 des Fahrrads 400 angebracht. Alternativ kann die Recheneinheit 60 auch in der Ausgabeeinheit 130 integriert sein.

Die Lenkerstellungs-Erfassungseinheit 70 ist auf der Figur 3 auf oder in dem Lenkerrohr 480 oberhalb des Lenkers 500 angebracht, sodass Drehbewegungen des Lenkers 500 und somit die Lenkerstellung erfasst werden können. Das Lenkerrohr 480 und damit die Lenkerstellungserfassungseinheit 70 bewegen sich während einer Drehbewegung des Lenkers 500 mit, sodass die Lenkerstellungserfassungseinheit 70 die Änderung der Lenkerstellung erfassen kann.

Die Geschwindigkeitserfassungseinheit 90 ist in dieser Ausführungsform an dem Rahmen 130 oberhalb des Vorderrades 440a angebracht. Es kann sich dabei beispielsweise um einen Radarsensor handeln, der die Geschwindigkeit des Fahrrads 400 mittels des Doppler-Effekts erfasst.

Die erste Drehzahlerfassungseinheit 90 ist in dieser Ausführungsform an dem Gabelrohr 520 des Fahrrads 400 angebracht, um dort die ersten Drehzahlen des Vorderrades 440a des Fahrrads 400 zu erfassen. Die zweite Drehzahlerfassungseinheit 50 ist in dieser Ausführungsform an der Unterstrebe 410 des Fahrrads 400 angebracht, um dort die zweiten Drehzahlen des Hinterrades 440b des Fahrrads 400 zu erfassen.

Die Ausgabeeinheit oder HMI 130 ist auf dem Lenker 500 angebracht, um für den Fahrer sichtbar zu sein. Diese ist dazu ausgebildet, eine Reifenluftdruckinformation wenigstens eines Rades des Zweirads auszugeben. Es kann sich hierbei beispielsweise um ein Display handeln.

Die Pumpe 110 ist mittels eines ersten Schlauchs 540a mit dem Vorderreifen 460a bzw. mittels eines zweiten Schlauchs 540b mit dem Hinterreifen 460b des Fahrrads 400 verbunden. Die Pumpe 110 wird von der Recheneinheit 10 bei Bedarf zur Erhöhung des Reifenluftdrucks angesteuert.

In dem ersten Ausführungsbeispiel gemäß Figur 3a wird das Verfahren gestartet und in einem sich daran anschließenden ersten Verfahrensschritt 600 die Lenkerstellung des Zweirads erfasst. Zur Erfassung der Lenkerstellung wird beispielsweise ein Lenkereinschlagwinkel des Zweirads erfasst. Im darauf folgenden Verfahrensschritt 605 wird die Drehzahl des Vorderrades und des Hinterrades Zweirads erfasst. In einem späteren Verfahrensschritt 660 wird eine Reifenluftdruckinformation des Zweirades in Abhängigkeit der erfassten Lenkerstellung und der erfassten Drehzahlen der Räder des Zweirads erzeugt. Die Information über den Reifenluftdruck kann beispielsweise eine Information darüber sein, ob der Reifenluftdruck der beiden Reifen voneinander abweicht. Er wird nur dann erzeugt, wenn die Abweichung zu groß ist. Zur Prüfung dessen wird in Verfahrensschritt 650 geprüft, ob es zu einer Überschreitung eines von der Lenkerstellung abhängigen Schwellenwertes durch eine festgestellte Abweichung der Drehzahlen voneinander kommt. Falls die Abweichung zu groß ist, wird in Verfahrensschritt 660 die Reifenluftdruckinformation erzeugt. Die Information über den Reifenluftdruck kann beispielsweise eine Information darüber sein, ob der Reifenluftdruck der beiden Räder voneinander abweicht. Mittels der erfassten Drehzahlen ist es möglich auf unterschiedliche Reifenluftdrücke der beiden Räder zu schließen, wenn die Drehzahlen gleichzeitig erfasst werden und voneinander abweichen. Falls die Abweichung den Schwellenwert nicht überschreitet, kann das Verfahren beendet werden oder optional von neuem beginnen.

In einem zweiten Ausführungsbeispiel werden die zuvor beschriebenen Verfahrensschritte und zusätzlich die im Folgenden beschriebenen Verfahrensschritte durchgeführt. Hierbei wird im Anschluss an Verfahrensschritt 605 im Verfahrensschritt 620 die Bewegungsrichtung des Zweirads in Abhängigkeit der erfassten Lenkerstellung ermittelt. Durch die Lenkerstellung wird die Vorderradstellung bestimmt und bei einem fahrenden Zweirad kann somit die Bewegungsrichtung des Zweirads ermittelt werden. Die ermittelte Bewegungsrichtung wird anschließend in Verfahrensschritt 630 mit einer im Wesentlichen geradlinigen Bewegungsrichtung verglichen. Es wird hierbei geprüft, ob die ermittelte Bewegungsrichtung eine zu große Abweichung von einer im Wesentlichen geradlinigen Bewegungsrichtung aufweist. Im Falle einer Übereinstimmung mit einer im Wesentlichen geradlinigen Bewegungsrichtung des Zweirads, werden im folgenden Verfahrensschritt 640 die erfassten Drehzahlen der beiden Räder miteinander verglichen und mögliche Abweichung der Drehzahlen voneinander festgestellt. Falls in Verfahrensschritt 630 jedoch eine zu große Abweichung der Bewegungsrichtung von einer im Wesentlichen geradlinigen Bewegungsrichtung festgestellt wird, kann das Verfahren von neuem beginnen und die Lenkerstellung in Verfahrensschritt 600 erneut erfasst werden. Alternativ kann bei einer zu großen Abweichung das Verfahren auch beendet werden.

In einem dritten Ausführungsbeispiel werden die zuvor im ersten Ausführungsbeispiel ausgeführten Verfahrensschritte und optional noch zusätzlich die Verfahrensschritte aus dem zweiten Ausführungsbeispiel durchgeführt. Zusätzlich wird hier im auf den Verfahrensschritt 660 folgenden Verfahrensschritt 680 der Reifenluftdruck in Abhängigkeit der festgestellten Drehzahlabweichungen angepasst. Daraufhin wird das Verfahren beendet.

In dem vierten Ausführungsbeispiel gemäß Figur 3b werden die im ersten Ausführungsbeispiel beschriebenen Verfahrensschritte durchgeführt. Zusätzlich wird in Verfahrensschritt 700 im Anschluss an Verfahrensschritt 605 eine Geschwindigkeit (v_{Rad}) des Zweirads erfasst. Diese kann beispielsweise über einen am Zweirad angeordneten Radarsensor mittels des Doppler-Effekts ermittelt werden. Im folgenden Verfahrensschritt 710 wird aus der in Verfahrensschritt 605 erfassten Drehzahl des Vorderrads und/oder des Hinterrads und dem entsprechenden Raddurchmesser eine Drehgeschwindigkeit (v_{VR}, v_{HR}) des Vorderrads und/oder des Hinterrads ermittelt. Im folgenden Verfahrensschritt 720 wird der absolute Reifenluftdruck des Vorderrads und/oder des Hinterrads in Abhängigkeit der entsprechenden Drehgeschwindigkeit (v_{VR}, v_{HR}) und der von der Drehgeschwindigkeit unabhängigen Geschwindigkeit (v_{Rad}) ermittelt. Im folgenden Verfahrensschritt 730 wird der ermittelte absolute Reifenluftdruck des Vorderrads und/oder des Hinterrads mit einem optimalen Reifenluftdruck verglichen. Hierbei wird geprüft, ob der festgestellte Reifenluftdruck des Vorderrades und/oder des Hinterrades Abweichungen von dem optimalen absoluten Reifenluftdruck aufweist. Falls die festgestellte Abweichung einen Schwellenwert überschreitet und damit zu groß ist, wird mit Verfahrensschritt 650 fortgefahren. Falls die Abweichung den Schwellenwert nicht überschreitet, wird das Verfahren beendet.
In einem fünften Ausführungsbeispiel werden die zuvor im ersten Ausführungsbeispiel beschriebenen Verfahrensschritte und die im vierten Ausführungsbeispiel gezeigten Verfahrensschritte durchgeführt. Zusätzlich kommt es hier in Verfahrensschritt 740 zu einer Anpassung des ermittelten Reifenluftdrucks des Vorderrades und/oder des Hinterrades, falls der festgestellte Reifenluftdruck des entsprechenden Rades in Verfahrensschritt 730 den Schwellenwert überschreitet.

In einem sechsten Ausführungsbeispiel gemäß Figur 3b werden die im ersten Ausführungsbeispiel beschriebenen Verfahrensschritte und optional zusätzlich die im vierten und im fünften Ausführungsbeispiel beschriebenen Verfahrensschritte durchgeführt. In dem sechsten Ausführungsbeispiel wird im auf den Verfahrensschritt 605 oder optional auf den Verfahrensschritt 730 folgenden Verfahrensschritt 750 einer von dem Lenkereinschlagwinkel abhängiger Korrekturfaktor berechnet und anschließend im folgenden Verfahrensschritt 770 die erfasste Drehzahl eines Rades mittels des Korrekturfaktors modifiziert. Der Korrekturfaktor kann mittels einer bestimmten Funktion beispielsweise linear oder exponential in Abhängigkeit des Lenkereinschlagwinkels angeglichen werden. So kann beispielsweise bei einer Kurvenfahrt des Zweirads die erfasste geringere Drehzahl des Hinterrads mittels des Korrekturfaktors so modifiziert werden, dass sie der erfassten Drehzahl des Vorderrads angeglichen wird. So können Drehzahlabweichungen, hervorgerufen durch Kurvenfahrten, vermieden werden. In dem folgenden Verfahrensschritt 790 wird die modifizierte Drehzahl des einen Rades mit der Drehzahl des anderen Rades verglichen und mögliche Abweichungen festgestellt. Im Anschluss darauf folgt Verfahrensschritt 650 aus dem ersten Ausführungsbeispiel.

## Patentansprüche

1. Verfahren zur Überprüfung des Reifenluftdrucks eines Zweirads,
wobei das Verfahren die folgenden Schritte umfasst:
- Erfassung (600, 605)
- einer Lenkerstellung (60) des Zweirads, und
- der Drehzahlen (20,40) eines Vorderrads (440a) und eines Hinterrads (440b) des Zweirads, und
- Erzeugung (660) einer Reifenluftdruckinformation (120) des Zweirads in Abhängigkeit der erfassten Lenkerstellung (60) und der erfassten Drehzahlen (20, 40),
**dadurch gekennzeichnet, dass** das Verfahren die folgenden zusätzlichen Schritte umfasst:
- Vergleichen (640) der erfassten Drehzahlen (20, 40) des Vorderrads (440a) und des Hinterrads (440b) miteinander, und
- Erzeugung (660) der Reifenluftdruckinformation (120), falls eine festgestellte Drehzahlabweichung einen von der Lenkerstellung (60) abhängigen Schwellenwert überschreitet.

2. Verfahren nach Anspruch 1, **dadurch gekennzeichnet, dass** zur Erfassung der Lenkerstellung (60) ein Lenkereinschlagwinkel des Zweirads erfasst wird.

3. Verfahren nach einem der Ansprüche 1 oder 2, **dadurch gekennzeichnet,**
**dass** das Verfahren die folgenden zusätzlichen Schritte umfasst:
- Ermittlung (620) der Bewegungsrichtung des Zweirads in Abhängigkeit der erfassten Lenkerstellung (70), und
- Erzeugung (660) der Reifenluftdruckinformation (120) bei einer ermittelten im Wesentlichen geradlinigen Bewegungsrichtung des Zweirads.

4. Verfahren nach Anspruch 1 oder 2 **dadurch gekennzeichnet, dass** das Verfahren die folgenden zusätzlichen Schritte umfasst:
- Berechnung (750) eines von einem zur Erfassung der Lenkerstellung erfassten Lenkereinschlagwinkels des Zweirads abhängigen Korrekturfaktors, und
- Modifizierung (770) der Drehzahl eines Rades mittels des Korrekturfaktors, und
- Vergleichen (790) der modifizierten Drehzahl des einen Rades mit der Drehzahl des anderen Rades, und
- Erzeugung (660) der Reifenluftdruckinformation (120), falls eine festgestellte Drehzahlabweichung einen von der Lenkerstellung (60) abhängigen Schwellenwert überschreitet.

5. Verfahren nach einem der Ansprüche 1 bis 4, **dadurch gekennzeichnet, dass** das Verfahren die folgenden zusätzlichen Schritte umfasst:
- Ermittlung (710) einer Drehgeschwindigkeit (v_{VR}, v_{HR}) des Vorderrads (440a) und/oder des Hinterrads (440b) in Abhängigkeit der erfassten Drehzahlen des entsprechenden Rades, und
- Erfassung (700) einer von der Drehgeschwindigkeit (v_{VR}, v_{HR}) unabhängigen Geschwindigkeit (v_{Rad}, 80) des Zweirads (v_{Rad}), und
- Ermittlung (720) des absoluten Reifenluftdrucks des Vorderrads und/oder des Hinterrads Rades in Abhängigkeit der jeweiligen Drehgeschwindigkeit (v_{VR},v_{HR}) und der Geschwindigkeit (v_{Rad},80) des Zweirads.

6. Verfahren nach einem der Ansprüche 1 bis 5, **dadurch gekennzeichnet, dass** das Verfahren den folgenden zusätzlichen Schritt umfasst:
- Anpassung (680) des Reifenluftdrucks wenigstens eines Rades in Abhängigkeit der festgestellten Abweichung der Drehzahlen (20, 40) zueinander und/oder des ermittelten absoluten Reifenluftdrucks.

7. Vorrichtung zur Überprüfung des Reifenluftdrucks eines Zweirads nach einem Verfahren der Ansprüche 1 bis 6, mit einer Recheneinheit (10), **dadurch gekennzeichnet, dass** die Recheneinheit (10)
- eine Lenkerstellung (60) des Zweirads erfasst, und
- die Drehzahlen (20, 40) eines Vorderrads (440a) und eines Hinterrads (440b) des Zweirads erfasst, und
- eine Reifenluftdruckinformation (120) in Abhängigkeit der erfassten Lenkerstellung und der erfassten Drehzahlen des Vorderrads und des Hinterrads des Zweirads erzeugt
**dadurch gekennzeichnet, dass** die Recheneinheit (10)
- - die erfassten Drehzahlen (20,40) des Vorderrads (440a) und des Hinterrads (440b) miteinander vergleicht, und
- - die Reifenluftdruckinformation (120) erzeugt, falls eine festgestellte Drehzahlabweichung einen von der Lenkerstellung (60) abhängigen Schwellenwert überschreitet.

8. Vorrichtung nach Anspruch 7, **dadurch gekennzeichnet, dass** die Recheneinheit (10)
- einen von einem zur Erfassung der Lenkerstellung (60) erfassten Lenkereinschlagwinkel des Zweirads abhängigen Korrekturfaktor berechnet, und
- mittels des Korrekturfaktors die Drehzahl eines Rades modifiziert, und
- die modifizierte Drehzahl des einen Rades mit der Drehzahl des anderen Rades vergleicht, und
- die Reifenluftdruckinformation (120) erzeugt, falls eine festgestellte Drehzahlabweichung einen von der Lenkerstellung abhängigen Schwellenwert überschreitet.

9. Vorrichtung nach einem der Ansprüche 7 oder 8, **dadurch gekennzeichnet, dass** die Recheneinheit (10)
- eine Drehgeschwindigkeit (v_{VR}, v_{HR}) des Vorderrads (440a) und/oder des Hinterrads (440b) des Zweirads in Abhängigkeit der erfassten Drehzahl eines Rades ermittelt, und
- eine von der Drehgeschwindigkeit (v_{VR}, v_{HR}) unabhängige Geschwindigkeit (v_{Rad}, 80) erfasst, und
- den absoluten Reifenluftdruck des Vorderrades (440a) und/oder des Hinterrades (440b) in Abhängigkeit der jeweiligen Drehgeschwindigkeit (v_{VR}, v_{HR}) und der Geschwindigkeit (v_{Rad}, 80) des Zweirads ermittelt.

10. Fahrrad (400) umfassend
- eine Vorrichtung mit einer Recheneinheit (10) nach Anspruch 7 bis 9, und
- eine Lenkerstellungserfassungseinheit (70) zur Erfassung einer Lenkerstellung (60) des Zweirads, und
- eine erste Drehzahlerfassungseinheit (30) für das Vorderrad (460a) des Zweirads, und
- eine zweite Drehzahlerfassungseinheit (50) für das Hinterrad (460b) des Zweirads,
- eine Geschwindigkeitserfassungseinheit (90) zur Erfassung einer von einer Drehgeschwindigkeit (v_{VR},v_{HR}) unabhängigen Geschwindigkeit (v_{Rad}, 80) des Zweirads, und
- eine Ausgabeeinheit (130) zur Ausgabe einer Reifenluftdruckinformation (120) des Vorderrads (440a) und/oder des Hinterrads (440b) des Zweirads.

11. Fahrrad (400) nach Anspruch 10 zusätzlich umfassend
- wenigstens eine an dem Zweirad angeordnete Pumpe (110) zur Erhöhung des Reifenluftdrucks,
wobei die Recheneinheit (10) der Vorrichtung
- die wenigstens eine Pumpe (130) zur Erhöhung des Reifenluftdrucks ansteuert, falls eine festgestellte Abweichung und/oder der von der Recheneinheit (10) ermittelte absolute Reifenluftdruck einen von der Lenkerstellung (60) abhängigen Schwellenwert überschreitet.

## Claims

1. Method for checking the tyre air pressure of a bicycle, wherein the method comprises the following steps:
- detecting (600, 605)
- a handlebar position (60) of the bicycle, and
- the rotation speeds (20, 40) of a front wheel (440a) and a rear wheel (440b) of the bicycle, and
- generating (660) an item of tyre air pressure information (120) of the bicycle depending on the detected handlebar position (60) and the detected rotation speeds (20, 40),
**characterized in that** the method comprises the following additional steps:
- comparing (640) the detected rotation speeds (20, 40) of the front wheel (440a) and the rear wheel (440b) with one another, and
- generating (660) the item of tyre air pressure information (120) if a determined rotation speed deviation exceeds a threshold value which is dependent on the handlebar position (60).

2. Method according to Claim 1, **characterized in that** a handlebar turning angle of the bicycle is detected for detecting the handlebar position (60).

3. Method according to either of Claims 1 and 2, **characterized in that** the method comprises the following additional steps:
- ascertaining (620) the movement direction of the bicycle depending on the detected handlebar position (70), and
- generating (660) the item of tyre air pressure information (120) given an ascertained substantially rectilinear movement direction of the bicycle.

4. Method according to Claim 1 or 2, **characterized in that** the method comprises the following additional steps:
- calculating (750) a correction factor which is dependent on a handlebar turning angle of the bicycle, which handlebar turning angle is detected for detecting the handlebar position, and
- modifying (770) the rotation speed of a wheel by means of the correction factor, and
- comparing (790) the modified rotation speed of one wheel with the rotation speed of the other wheel, and
- generating (660) the item of tyre air pressure information (120) if a determined rotation speed deviation exceeds a threshold value which is dependent on the handlebar position (60).

5. Method according to one of Claims 1 to 4, **characterized in that** the method comprises the following additional steps:
- ascertaining (710) a rotational speed (v_{VR}, v_{HR}) of the front wheel (440a) and/or of the rear wheel (440b) depending on the detected rotation speeds of the corresponding wheel, and
- detecting (700) a speed (v_{Rad}, 80) of the bicycle (v_{Rad}), which speed is independent of the rotational speed (v_{VR}, v_{HR}), and
- determining (720) the absolute tyre air pressure of the front wheel and/or of the rear wheel wheel depending on the respective rotational speed (v_{VR}, v_{HR}) and the speed (v_{Rad}, 80) of the bicycle.

6. Method according to one of Claims 1 to 5, **characterized in that** the method comprises the following additional step:
- adjusting (680) the tyre air pressure of at least one wheel depending on the determined deviation of the rotation speeds (20, 40) from one another and/or on the determined absolute tyre air pressure.

7. Apparatus for checking the tyre air pressure of a bicycle according to a method of Claims 1 to 6, comprising a computer unit (10), **characterized in that** the computer unit (10)
- detects a handlebar position (60) of the bicycle, and
- detects the rotation speeds (20, 40) of a front wheel (440a) and a rear wheel (440b) of the bicycle, and
- generates an item of tyre air pressure information (120) depending on the detected handlebar position and the detected rotation speeds of the front wheel and the rear wheel of the bicycle,
**characterized in that** the computer unit (10)
- compares the detected rotation speeds (20, 40) of the front wheel (440a) and the rear wheel (440b) with one another, and
- generates the item of tyre air pressure information (120) if a determined rotation speed deviation exceeds a threshold value which is dependent on the handlebar position (60).

8. Apparatus according to Claim 7, **characterized in that** the computer unit (10)
- calculates a correction factor which is dependent on a handlebar turning angle of the bicycle, which handlebar turning angle is detected for detecting the handlebar position (60), and
- modifies the rotation speed of a wheel by means of the correction factor, and
- compares the modified rotation speed of one wheel with the rotation speed of the other wheel, and
- generates the item of tyre air pressure information (120) if a determined rotation speed deviation exceeds a threshold value which is dependent on the handlebar position.

9. Apparatus according to either of Claims 7 and 8, **characterized in that** the computer unit (10)
- ascertains a rotational speed (v_{VR}, v_{HR}) of the front wheel (440a) and/or the rear wheel (440b) of the bicycle depending on the detected rotation speed of a wheel, and
- detects a speed (v_{Rad}, 80) which is independent of the rotational speed (v_{VR}, v_{HR}), and
- ascertains the absolute tyre air pressure of the front wheel (440a) and/or the rear wheel (440b) depending on the respective rotational speed (v_{VR}, v_{HR}) and the speed (V_{Rad}, 80) of the bicycle.

10. Bicycle (400) comprising
- an apparatus with a computer unit (10) according to Claims 7 to 9, and
- a handlebar position detection unit (70) for detecting a handlebar position (60) of the bicycle, and
- a first rotation speed detection unit (30) for the front wheel (460a) of the bicycle, and
- a second rotation speed detection unit (50) for the rear wheel (460b) of the bicycle,
- a speed detection unit (90) for detecting a speed (v_{Rad}, 80) of the bicycle, which speed is independent of a rotational speed (v_{VR}, v_{HR}), and
- an output unit (130) for outputting an item of tyre air pressure information (120) of the front wheel (440a) and/or the rear wheel (440b) of the bicycle.

11. Bicycle (400) according to Claim 10, additionally comprising
- at least one pump (110), which is arranged on the bicycle, for increasing the tyre air pressure,
wherein the computer unit (10) of the apparatus
- actuates the at least one pump (130) for increasing the tyre air pressure if a determined deviation and/or the absolute tyre air pressure which is ascertained by the computer unit (10) exceeds a threshold value which is dependent on the handlebar position (60).

## Revendications

1. Procédé de contrôle de la pression d'air des pneus d'un deux-roues, le procédé comprenant les étapes suivantes :
- détection (600, 605)
- d'une position de guidon (60) du deux-roues, et
- des vitesses de rotation (20, 40) d'une roue avant (440a) et d'une roue arrière (440b) du deux-roues, et
- génération (660) d'une information de pression d'air de pneu (120) du deux-roues en fonction de la position de guidon (60) détectée et des vitesses de rotation (20, 40) détectées,
**caractérisé en ce que** le procédé comprend les étapes supplémentaires suivantes :
- comparaison (640) des vitesses de rotation (20, 40) détectées de la roue avant (440a) et de la roue arrière (440b) entre elles, et
- génération (660) de l'information de pression d'air de pneu (120) dans le cas où un écart de vitesse de rotation constaté dépasse une valeur de seuil dépendant de la position de guidon (60).

2. Procédé selon la revendication 1, **caractérisé en ce qu'**un angle de braquage de guidon du deux-roues est détecté pour la détection de la position de guidon (60).

3. Procédé selon l'une des revendications 1 et 2, **caractérisé en ce que** le procédé comprend les étapes supplémentaires suivantes :
- détermination (620) de la direction de déplacement du deux-roues en fonction de la position de guidon (70) détectée, et
- génération (660) de l'information de pression d'air de pneu (120) en présence d'une direction de déplacement déterminée du deux-roues sensiblement en ligne droite.

4. Procédé selon la revendication 1 ou 2, **caractérisé en ce que** le procédé comprend les étapes supplémentaires suivantes :
- calcul (750) d'un facteur de correction dépendant d'un angle de braquage de guidon du deux-roues détecté pour détecter la position de guidon, et
- modification (770) de la vitesse de rotation d'une roue au moyen du facteur de correction, et
- comparaison (790) de la vitesse de rotation modifiée d'une roue avec la vitesse de rotation de l'autre roue, et
- génération (660) de l'information de pression d'air de pneu (120) dans le cas où un écart de vitesse de rotation constaté dépasse une valeur de seuil dépendant de la position de guidon (60).

5. Procédé selon l'une des revendications 1 à 4, **caractérisé en ce que** le procédé comprend les étapes supplémentaires suivantes :
- détermination (710) d'une vitesse de rotation (V_{VR}, V_{HR}) de la roue avant (440a) et/ou de la roue arrière (440b) en fonction des vitesses de rotation détectées de la roue correspondante, et
- détection (700) d'une vitesse (V_{Rad}, 80) du deux-roues (V_{Rad}) indépendante de la vitesse de rotation (V_{VR}, V_{HR}), et
- détermination (720) de la pression d'air de pneu absolue de la roue avant et/ou de la roue arrière roue en fonction de la vitesse de rotation (V_{VR}, V_{HR}) respective et de la vitesse (V_{Rad}, 80) du deux-roues.

6. Procédé selon l'une des revendications 1 à 5, **caractérisé en ce que** le procédé comprend l'étape supplémentaire suivante :
- adaptation (680) de la pression d'air de pneu d'au moins une roue en fonction de l'écart constaté des vitesses de rotation (20, 40) entre elles et/ou de la pression d'air de pneu absolue déterminée.

7. Dispositif de contrôle de la pression d'air des pneus d'un deux-roues conformément à un procédé selon l'une des revendications 1 à 6, comprenant une unité de calcul (10), **caractérisé en ce que** l'unité de calcul (10)
- détecte une position de guidon (60) du deux-roues, et
- détecte les vitesses de rotation (20, 40) d'une roue avant (440a) et d'une roue arrière (440b) du deux-roues, et
- génère une information de pression d'air de pneu (120) en fonction de la position de guidon détectée et des vitesses de rotation détectées de la roue avant et de la roue arrière du deux-roues,
**caractérisé en ce que** l'unité de calcul (10)
- compare entre elles les vitesses de rotation (20, 40) détectées de la roue avant (440a) et de la roue arrière (440b), et
- génère l'information de pression d'air de pneu (120) dans le cas où un écart de vitesse de rotation constaté dépasse une valeur de seuil dépendant de la position de guidon (60).

8. Dispositif selon la revendication 7, **caractérisé en ce que** l'unité de calcul (10)
- calcule un facteur de correction dépendant d'un angle de braquage de guidon du deux-roues détecté pour détecter la position de guidon (60), et
- modifie la vitesse de rotation d'une roue au moyen du facteur de correction, et
- compare la vitesse de rotation modifiée d'une roue à la vitesse de rotation de l'autre roue, et
- génère l'information de pression d'air de pneu (120) dans le cas où un écart de vitesse de rotation constaté dépasse une valeur de seuil dépendant de la position de guidon.

9. Dispositif selon l'une des revendications 7 et 8, **caractérisé en ce que** l'unité de calcul (10)
- détermine une vitesse de rotation (V_{VR}, V_{HR}) de la roue avant (440a) et/ou de la roue arrière (440b) du deux-roues en fonction de la vitesse de rotation détectée d'une roue, et
- détecte une vitesse (V_{Rad}, 80) indépendante de la vitesse de rotation (V_{VR}, V_{HR}), et
- détermine la pression d'air de pneu absolue de la roue avant (440a) et/ou de la roue arrière (440b) en fonction de la vitesse de rotation (V_{VR}, V_{HR}) respective et de la vitesse (V_{Rad}, 80) du deux-roues.

10. Bicyclette (400), comprenant
- un dispositif comprenant une unité de calcul (10) selon les revendications 7 à 9, et
- une unité de détection de position de guidon (70) destinée à détecter une position de guidon (60) du deux-roues, et
- une première unité de détection de vitesse de rotation (30) pour la roue avant (460a) du deux-roues, et
- une deuxième unité de détection de vitesse de rotation (50) pour la roue arrière (460b) du deux-roues,
- une unité de détection de vitesse (90) destinée à détecter une vitesse (V_{Rad}, 80) du deux-roues indépendante de la vitesse de rotation (V_{VR}, V_{HR}), et
- une unité de diffusion (130) destinée à délivrer en sortie une information de pression d'air de pneu (120) de la roue avant (440a) et/ou de la roue arrière (440b) du deux roues.

11. Bicyclette (400) selon la revendication 10, comprenant en outre
- au moins une pompe (110) disposée au niveau du deux-roues pour augmenter la pression d'air de pneu,
l'unité de calcul (10) du dispositif
- commandant l'au moins une pompe (130) en vue d'augmenter la pression d'air de pneu dans le cas où un écart constaté et/ou la pression d'air de pneu absolue déterminée par l'unité de calcul (10) dépasse une valeur de seuil dépendant de la position de guidon (60).
